# EUROPÄISCHE PATENTANMELDUNG

(11) **EP 3 109 160 A1**
(43) Veröffentlichungstag der Anmeldung: **28.12.2016**
(21) Anmeldenummer: 16174342.2
(22) Anmeldetag: 14.06.2016
(51) Int. Cl.: B64D 11/06, B60N 2/30, B60N 2/46

(54) **FLUGZEUGSITZ MIT SITZ- LIEGEFUNKTION**

(30) Priorität: 26.06.2015 DE 102015110369
(71) Anmelder: Peak Technology GmbH, 4615 Holzhausen (AT)
(72) Erfinder: Meindlhumer, Daniel, 4731 Prambachkirchen (AT)
(74) Vertreter: Stütz, Jan

(57) **Zusammenfassung**

Flugzeugsitz mit einer Trägerstruktur (22), einer ersten Sitzfläche (26) und einem ersten Rückenteil (30), das an seinem unteren Bereich schwenkbar an der Trägerstruktur (22) angebracht ist. In einer ersten Position des ersten Rückenteils (30) erlaubt der Sitz ein aufrechtes Sitzen einer Person. Das erste Rückenteil (30) ist derart herunterklappbar, dass es in einer zweiten Position horizontal über der ersten Sitzfläche (26) verläuft. Die Rückseite des ersten Rückenteils (30) bildet eine zweite Sitzfläche (38). Zwischen der Trägerstruktur (22) und dem ersten Rückenteil ist ein zweites Rückenteil (40) ausklappbar oder entfaltbar angeordnet, sodass der Sitz (20) in der zweiten Position des ersten Rückenteils (30) einen Liegesitz für die Person bildet.

## Beschreibung

### Gebiet der Erfindung

Die Erfindung betrifft einen Sitz für ein Luftfahrzeug. Insbesondere betrifft die Erfindung einen Sitz für ein Flugzeug mit einer veränderbaren Sitzposition.

### Hintergrund der Erfindung

Verbreitet werden in kommerziellen Flugzeugen für die Beförderung von Passagieren sogenannte "rest facilities" insbesondere für Besatzungsmitglieder vorgesehen. Unter diesen "rest facilities" kann eine Sitz- oder Liegemöglichkeit mit Fußstützen und/oder Beinstützen verstanden werden, die ein Ruhen oder Schlafen innerhalb des Flugzeugs bzw. der Flugzeugkabine erlaubt. Durch den Einsatz dieser Ruheeinrichtungen kann es beispielsweise ermöglicht werden, die Flugdienstzeiten der Besatzung anzupassen, was unter anderem wirtschaftliche Vorteile für die Fluggesellschaft bedeuten kann. Die "rest facilities" unterliegen häufig bestimmten Vorschriften und Anforderungen und können hierzu beispielsweise in Klassen aufgeteilt sein. So kann beispielsweise ein Sitz der Klasse 2 ein Sitz in einer Flugzeugkabine sein, an den neben weiteren Kriterien die Anforderungen gestellt werden können, eine Neigung der Rückenlehne von mindestens 45 Grad zur Vertikalen, einen Mindestabstand von 137,5 cm und eine Sitzbreite von mindestens 50 cm aufzuweisen. Zusätzlich kann eine Beinstütze und/oder Fußstütze gefordert sein.

Derartige Sitze weisen häufig zwei Positionen auf, in die sich der Sitz im Gebrauch einstellen lässt: eine aufrechte "TTL"-Sitzposition für Taxiing, Takeoff und Landing sowie die "Rest"-Position, beispielsweise während des Reisefluges zum Liegen oder Schlafen für ein Besatzungsmitglied. Derartige, im Stand der Technik bekannte Sitze verfügen häufig zusätzlich über ein Ablagefach zur Aufbewahrung eines vorgeschriebenem "Emergency Sets" sowie über einen "Tray Table".

So ist beispielsweise ein "Ultra High Comfort Attendant Seat" der Firma UTC Aerospace Systems bekannt, der eine Neigung der Rückenlehne dadurch erreicht, dass ein unterer Teil der Rückenlehne in vertikaler Richtung herausschwenkt und über einen Stützmechanismus die geneigte Rückenlehne in dieser Stellung gehalten wird. Dieses Prinzip kann allerdings nachteilige Eigenschaften hinsichtlich einer Liegeposition der Person, sowie Komfort, Handhabung, Stabilität und Platzbedarf haben.

### Zusammenfassung der Erfindung

Ausführungsformen der Erfindung können vorteilhaft ein vertikales Schwenken eines Rückenteils eines Flugzeugsitzes über einen größeren Winkel bei einfacher Handhabung und Stabilität ermöglichen, womit eine höhere Flexibilität und geringere Kosten im Flugbetrieb erreicht werden können. Der weiter unten beschriebenen Erfindung liegen unter anderem die folgenden Überlegungen zugrunde. Durch ein Schwenken um eine am oberen Ende eines Rückenteils angeordnete Schwenkachse gemäß den Stand der Technik kann zwar ein Neigungswinkel gegenüber einer Vertikalen von einigen Grad erreicht werden, allerdings treten bei größeren Winkeln, insbesondere bei Winkeln von beispielsweise 30 Grad oder mehr aufgrund des begrenzten Platzes unerwünschte Effekte auf, wie beispielsweise Stabilitätsprobleme und Zunahme eines Gewichtes durch aufwendigere Abstützmechanismen, höhere Kräfte und eine durch die Winkelbewegung verursachte ungünstige höhere Position der Liegefläche über einem Boden. Es wäre also wünschenswert, einen stabileren Aufbau zu schaffen, der insbesondere Positionen mit einem Neigungswinkel des Rückenteils gegenüber einer Vertikalen von 45 Grad oder mehr erlaubt und dabei platzsparend und gewichtsparend aufgebaut ist.

Es wird daher ein Flugzeugsitz vorgeschlagen, der eine Trägerstruktur und eine erste Sitzfläche aufweist, die sich im Wesentlichen horizontal erstreckt und an der Trägerstruktur angebracht ist. Weiterhin ist ein erstes Rückenteil vorgesehen, wobei das erste Rückenteil um eine im Bereich der ersten Sitzfläche angeordnete Rückenteilschwenkachse in einer vertikalen Ebene schwenkbar an der Trägerstruktur angebracht ist, sodass das erste Rückenteil vertikal angeordnet ist und in einer ersten Position zusammen mit der ersten Sitzfläche einen Sitz für ein aufrechtes Sitzen einer Person bildet und sich in einer zweiten Position horizontal über der ersten Sitzfläche erstreckt. Die der Trägerstruktur zugewandte Rückseite des ersten Rückenteils ist derart ausgeführt, dass zumindest ein Teilbereich der Rückseite in der zweiten Position eine zweite Sitzfläche bildet. Darüber hinaus ist ein zweites Rückenteil vorgesehen, das zwischen der Trägerstruktur und dem ersten Rückenteil angeordnet ist und mit einem Ende an der Trägerstruktur und mit seinem anderen Ende schräg verlaufend am ersten Rückenteil angebracht ist, sodass in der zweiten Position das zweite Rückenteil zusammen mit der zweiten Sitzfläche einen Liegesitz für die Person bildet.

Ein Vorteil dieses Flugzeugsitzes kann darin gesehen werden, dass insbesondere bei dem gerade in der Luftfahrt meist begrenzten Platzangebot eine Neigung des Rückenteils von 45 Grad oder mehr gegenüber einer Vertikalen ermöglicht werden kann. Weiterhin kann das Umstellen der verschiedenen Sitzpositionen mit wenigen Handgriffen erfolgen und kann durch seine Einfachheit eine Einweisung für die betreffende Person, beispielsweise für Flugbegleiter, erübrigen. Zudem kann der zur Verfügung stehende Platz durch eine platzsparende Anordnungsmöglichkeit optimal genutzt werden, da beide Seiten des ersten Rückenteils bzw. der Rückenlehne funktional genutzt werden.

Unter einer Trägerstruktur kann beispielsweise eine in einem Innenbereich eines Flugzeugs angeordnete Stützstruktur wie beispielsweise eine Kabinenwand, Trennwand oder ähnliche starre Anordnung verstanden werden, die ausreichend stabil und fest aufgebaut ist, dass sie ausreichend Stabilität zur Aufhängung oder Anbringung eines Flugzeugssitzes bietet. Unter einer horizontalen Erstreckung kann eine im Wesentlichen parallel zu einem Boden verlaufende Richtung verstanden werden. Dies kann beispielsweise der Boden einer Flugzeugkabine sein. Analog beschreibt eine vertikale Erstreckung eine im Wesentlichen senkrecht zu diesem Boden verlaufende Richtung. Ein Rückenteil kann eine bekannte Rückenlehne oder Rückenstütze sein, die geeignet ist, eine sitzende oder zurückgelehnte Person in der jeweiligen Position zu stützen.

Das in der zweiten Position horizontal angeordnete erste Rückenteil kann in einem Beispiel auch auf der ersten Sitzfläche abgestützt sein. Dies kann den Vorteil haben, dass keine oder eine geringere Abstützung des entfernten Endes des ersten Rückenteils gegenüber dem Boden notwendig ist, weil durch eine erhöhte Stabilität geringere Kräfte im Bereich der Trägerstruktur einwirken. Die Rückseite des ersten Rückenteils kann beispielsweise mit einer geeigneten Polsterung und/oder Beschichtung ausgeführt sein, sodass eine Person bequem darauf sitzen oder liegen kann.

Das zweite Rückenteil bietet mit anderen Worten in der zweiten Position eine Fläche, die sich zum einen an der Trägerstruktur und zum anderen am ersten Rückenteil abstützt. Denkbar sind hier verschiedenste Lösungen, wie beispielsweise starre Strukturen, die beispielsweise durch Gelenke verbunden sein können, denkbar sind aber unter anderem auch Gewebe aus Textil oder anderen Fasern mit ausreichender Festigkeit. Das zweite Rückenteil kann zudem ausgeführt sein, in der ersten Position möglichst platzsparend zwischen der Trägerstruktur und dem ersten Rückenteil verstaut zu werden. Die schräge Anbringung des zweiten Rückenteils am ersten Rückenteil bedeutet, dass das zweite Rückenteil eine Neigung gegenüber dem ersten Rückenteil von deutlich weniger als 90 Grad gegenüber einer Senkrechten, also beispielsweise 45 Grad in Richtung der Trägerstruktur aufweist. Ein Liegesitz kann als Sitz für eine Person verstanden werden, dessen Rückenlehne in einer Sitz/Liege-Position mit einer deutlich von einer aufrechten oder senkrechten Position abweichenden Neigung angeordnet ist. Diese Position soll eine gegenüber einer aufrechten Sitzposition stärkere horizontale Lagerung einer Person zum Zwecke der Erholung und Entspannung ermöglichen.

In einer Ausführungsform weist das zweite Rückenteil ein erstes und zweites flächiges Segment auf, wobei das erste flächige Segment um eine erste Segmentschwenkachse schwenkbar an der Trägerstruktur angebracht ist und über eine zweite Segmentschwenkachse an einer gemeinsamen Kante schwenkbar mit einem zweiten flächigen Segment verbunden ist. Das zweite flächige Segment ist um eine dritte Segmentschwenkachse schwenkbar an der Rückseite des ersten Rückenteils angebracht, wobei die beiden Segmente so ausgeführt sind und die Segmentschwenkachsen parallel zueinander so angeordnet sind, dass in einer zweiten Position des ersten Rückenteils das erste Segment und das zweite Segment hintereinander in einer Ebene angeordnet sind.

Ein Vorteil dieser Ausführungsform kann darin gesehen werden, dass eine mechanisch stabile und platzsparende Ausführung des zweiten Rückenteils möglich sein kann. Die schwenkbaren Verbindungen können beispielsweise durch Scharniere oder ähnliche geeignete Gelenke bereitgestellt werden. Die Betätigung bzw. Bewegung der einzelnen Segmente kann gleichzeitig durch das Schwenken des ersten Rückenteils erfolgen. In einem Beispiel werden statt zwei Segmenten drei oder mehr Segmente verwendet. Es ist ebenfalls denkbar, dass zusätzliche Faltmechanismen mit verschiedenen zusätzlichen Schwenkachsen beispielsweise zur optimalen Nutzung des Platzes zwischen dem ersten Rückenteil und der Trägerstruktur genutzt werden können. Die Anordnung der beiden Segmente hintereinander in einer Ebene soll verdeutlichen, dass das zweite Rückenteil geeignet sein soll, als Rückenstütze oder Rückenlehne für eine Person zu dienen.

In einer Ausführungsform ist in der zweiten Position des ersten Rückenteils eine Position der beiden Segmente des zweiten Rückenteils relativ zueinander feststellbar. Mit anderen Worten ist eine Form des zweiten Rückenteils arretierbar. Dies kann beispielsweise dadurch erfolgen, dass an der Schwenkachse eine arretierbare Mechanik angeordnet ist, die entweder automatisch in eine arretierte Position einrastet oder auch manuell durch die Person eingestellt oder festgestellt werden kann. In einem Beispiel weist der Flugzeugssitz eine kombinierte Hebelmechanik auf, die eine Arretierung des ersten Rückenteils und eine Arretierung der beiden Segmente erlaubt. Vorteil einer Arretierung ist eine verlässliche Stabilität und das Verhindern einer ungewollten Bewegung der Segmente, was insbesondere durch Eigenbewegung des Flugzeugs wie beispielsweise durch Turbulenzen verursacht werden könnte.

In einer Ausführungsform sind eine Länge des ersten und zweiten Segmentes und die Anordnung der Segmentschwenkachsen des zweiten Rückteils so gewählt, dass in der ersten Position des ersten Rückenteils das erste flächige Segment im Wesentlichen parallel neben dem zweiten flächigen Segment angeordnet ist. Dies kann den Vorteil haben, dass ein Raum zwischen der Trägerstruktur und dem ersten Rückenteil möglichst effektiv genutzt wird, sodass nur minimal zusätzlicher Platz zum Verstauen des zweiten Rückenteils benötigt wird. Mit anderen Worten kann beispielsweise das erste und zweite Segment parallel direkt an der Rückseite des ersten Rückenteils angeordnet sein.

In einer Ausführungsform beträgt in der zweiten Position ein Winkel zwischen einer Senkrechten zur Ebene des ersten Rückenteils und der Ebene des ersten und zweiten Segmentes zwischen 45 und 50 Grad. Unter der Annahme, dass ein Winkel von 0 Grad einer aufrechten Sitzposition entspricht, bedeutet diese Neigung einer in etwa halb-liegenden Position einer Rückenlehne. So werden beispielsweise in der Luftfahrt im Rahmen der Regelungen für den Flugbetrieb bestimmte Mindestneigungen, beispielsweise von 45 Grad für Sitze der Klasse 2 gefordert. Ein Vorteil kann also darin gesehen werden, dass trotz der Platzbeschränkungen derartige Winkelbereiche ermöglicht werden und hierdurch wiederum gesetzliche Anforderungen erfüllt werden können.

In einer Ausführungsform ist an einem von der Trägerstruktur entfernten Ende des ersten Rückenteils eine Stützeinrichtung angeordnet, die ausgeführt ist, das erste Rückenteil in der zweiten Position relativ zu einem Boden abzustützen. Dies kann den Vorteil einer erhöhten Stabilität bedeuten, da durch die Anbringung des ersten Rückenteils an einer Stelle der Trägerstruktur in Kombination mit einem Gewicht der Person an der Verbindung zwischen dem ersten Rückenteil und der Trägerstruktur unter Umständen hohe Kräfte auftreten können. Diese können durch den zusätzlichen Abstützpunkt verringert werden. Eine solche Stützeinrichtung kann beispielsweise ausklappbar oder herausziehbar in einem Innenbereich oder auch außen an dem ersten Rückenteil angebracht sein oder auch in einem weiteren Beispiel als separates Element anbringbar sein.

Gemäß einer Ausführungsform weist der Flugzeugsitz ein Fußteil auf, das an der zweiten Sitzfläche an dem von der Trägerstruktur entfernten Ende des ersten Rückenteils anbringbar oder ausfaltbar ist und gemäß einer weiteren Ausführungsform abnehmbar ist und zur Aufbewahrung in einem Innenbereich der ersten Sitzfläche angeordnet werden kann. Vorteil dieser Ausführungsform kann eine vergrößerte Länge der Sitz- oder Liegefläche sein, sodass die Person mit der gesamten Beinlänge auf der zweiten Sitzfläche und dem Fußteil Platz findet. Ein Verstauen des Fußteils in der ersten Sitzfläche, beispielsweise auf seiner Unterseite, kann zusätzliche Platzersparnis ermöglichen. Das Fußteil kann gemäß einem Beispiel am ersten Rückenteil steckbar angebracht sein. In einem weiteren Beispiel ist das Fußteil faltbar ausgeführt und/oder in das erste Rückenteil integrierbar.

In einer Ausführungsform ist die erste Sitzfläche von der Trägerstruktur lösbar und als Fußteil am ersten Rückenteil anbringbar. Dem liegt die folgende Überlegung zugrunde. In der zweiten Position des ersten Rückenteils befindet sich die erste Sitzfläche auf dessen Unterseite und kann gegebenenfalls als Unterstützung für das erste Rückenteil dienen. Wenn dies nicht der Fall ist, kann die erste Sitzfläche beispielsweise durch eine geeignete Mechanik von der Trägerstruktur gelöst werden und als Fußteil am entfernten Ende des ersten Rückenteils angebracht oder befestigt werden. Als Vorteil kann hier eine doppelte Verwendung der ersten Sitzfläche und somit Platzersparnis und eine mögliche Gewichtsverringerung des Flugzeugssitzes gesehen werden.

Gemäß einer Ausführungsform ist die erste Sitzfläche in einer ersten Position des ersten Rückenteils von einer horizontalen Position in eine vertikale Position schwenkbar und derart mit einer Armlehne verbunden, dass diese beim Schwenken des ersten Sitzes in die vertikale Position ebenfalls von einer horizontalen Position in eine vertikale Position schwenkt. Mit anderen Worten kann in einer ersten Position die erste Sitzfläche hochgeklappt werden und verringert somit einen horizontalen Platzbedarf des Flugzeugssitzes. Weiterhin erfolgt beim Hochklappen der ersten Sitzfläche durch eine mechanische Verbindung ein Verschwenken einer heruntergeklappten Armlehne in eine eingeklappte oder hochgeklappte Position. Dies kann den Vorteil haben, dass beide Schwenkfunktionen mit nur einem Handgriff erledigt werden können.

### Kurze Beschreibung der Figuren

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden.
Fig. 1 zeigt einen Längsschnitt von zwei Flugzeugkabinen mit Positionen von Flugzeugsitzen für Flugbegleiter.
Fig. 2A zeigt einen Flugzeugsitz gemäß der Erfindung in einer ersten Position mit hochgeklappter erster Sitzfläche und hochgeklappten Armlehnen.
Fig. 2B zeigt einen Flugzeugsitz gemäß der Erfindung in einer ersten Position ("TTL-Position") mit heruntergeklappter erster Sitzfläche und heruntergeklappten Armlehnen.
Fig. 2C zeigt einen Flugzeugsitz gemäß der Erfindung in einer zweiten Position ("Rest Position") mit Fußteil.
Fig. 3A bis 3D zeigen Schritte eines Verstellens eines Flugzeugsitzes gemäß der Erfindung von einer ersten Position in eine zweite Position des ersten Rückenteils.
Fig. 4 zeigt einen Flugzeugsitz gemäß der Erfindung mit einer Verstaumöglichkeit für das Fußteil an der ersten Sitzfläche.

Die Zeichnungen sind lediglich schematisch und nicht maßstabsgetreu. Grundsätzlich sind identische oder ähnliche Teile mit den gleichen Bezugszeichen versehen.

### Detaillierte Beschreibung von Ausführungsbeispielen

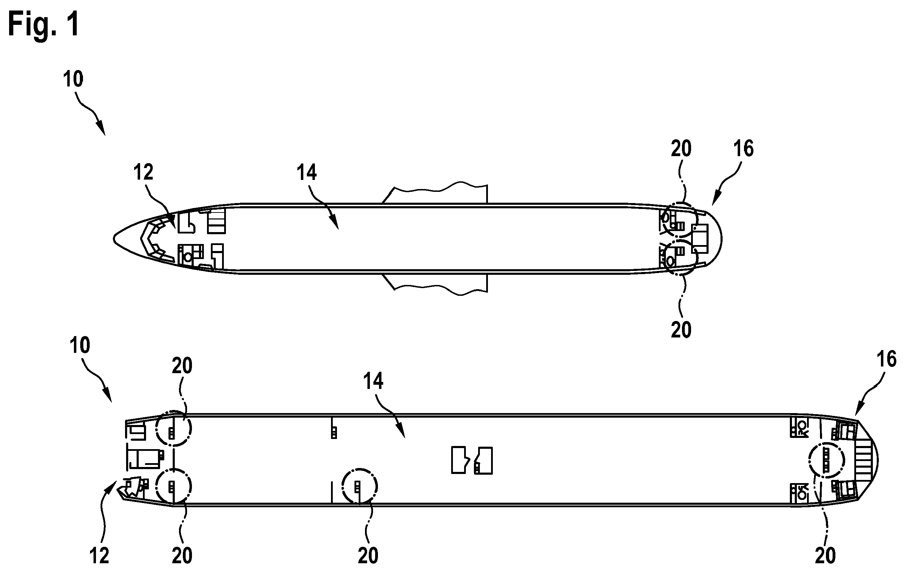

Fig. 1A zeigt einen Längsschnitt von Flugzeugkabinen zweier verschiedener kommerzieller Flugzeuge 10 zum Transport von Personen mit einem Cockpitbereich 12 und einer Kabine 14. Die gezeigten Beispiele sollen lediglich beispielhaft einen Aufbau derartiger Flugzeugkabinen 14 verdeutlichen, grundsätzlich kann der beschriebene Flugzeugsitz 20 in allen Fahrzeugen, insbesondere in Luftfahrzeugen eingesetzt werden. Üblicherweise gehören zur Besatzung in Passagierflugzeugen Flugbegleiter, die sich vor allem im Bereich der Kabine 14 aufhalten können. Während des Startes, der Landung und Taxiing sowie auch während des Reisefluges ist für die Flugbegleiter ein meist von den Passagiersitzen räumlich separierter Sitz 20 vorgesehen. Die Bereiche in der Kabine 14, in denen einer oder mehrere solcher Sitze 20 vorgesehen sind, sind jeweils mit einem Kreis gekennzeichnet. Während in kleineren Flugzeugen 10 diese Sitze 20 für Flugbegleiter oft in einem Heckbereich 16 des Flugzeugs 10 angeordnet sind, können sich diese Sitze in größeren Flugzeugen 10 häufig auch verteilt in der Kabine 14 befinden. Der Sitz 20 kann hier beispielsweise in oder auch entgegen der Flugrichtung angeordnet sein. Zur stabileren Verankerung oder zur räumlichen Trennung können die Sitze 20 an Kabinentrennwänden angeordnet sein.

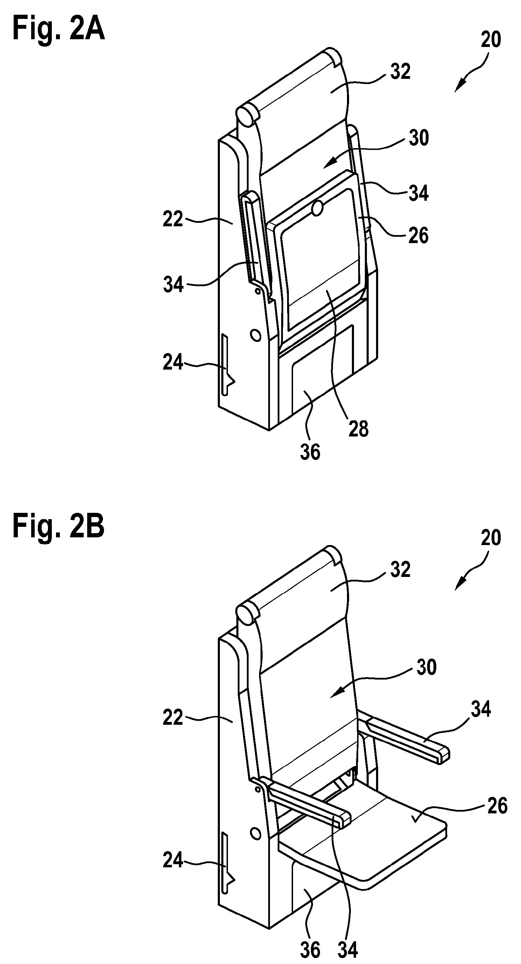

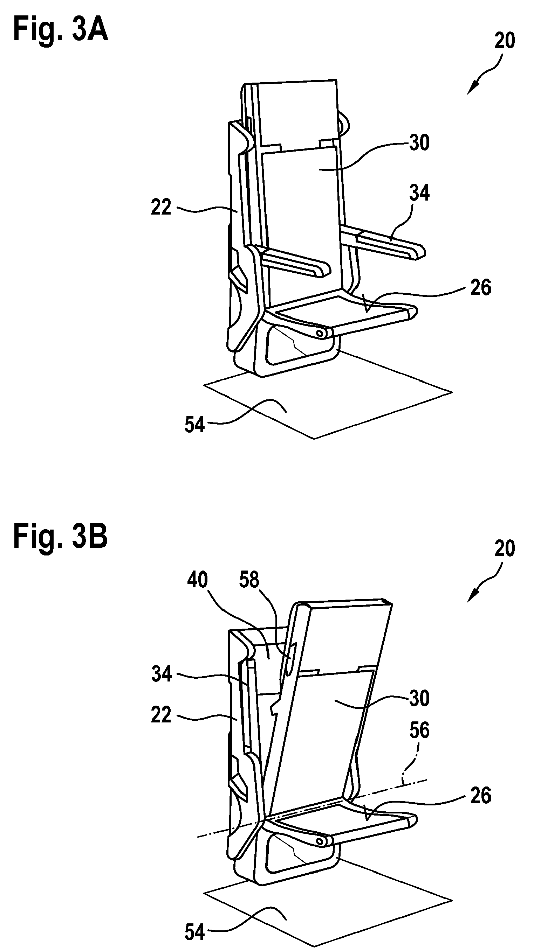

Fig. 2A bis 2C zeigen einen Flugzeugsitz 20 gemäß der Erfindung in drei verschiedenen Einsatzsituationen. In Fig. 2A ist der Flugzeugsitz 20 in einem eingeklappten Zustand gezeigt, wie er beispielsweise beim Aus- und Einsteigen bzw. Be- und Entladen des Flugzeugs 10 vorzufinden ist. Eine solche platzsparende Anordnung ist in den meisten Fällen notwendig, da sich derartige Sitze 20 meist im Bereich von Türen, Notausgängen oder Durchgängen befinden, die zu bestimmten Zeitpunkten freizuhalten sind. Der Sitz weist eine Trägerstruktur 22 auf, der beispielsweise als Rahmen aus Metall und/oder Kunststoff ausgeführt sein kann. Die Trägerstruktur 22 weist eine ausreichende Stabilität auf, dass sie fest mit der Kabine 14, beispielsweise mit einem Kabinenboden (siehe Fig. 3A bis 3D) oder einer Zwischenwand oder Trennwand in der Kabine 14 verbunden werden kann und die die durch das Sitzen oder Liegen einer Person verursachten Kräfte aufnehmen kann. Im unteren Bereich des Sitzes 20 ist ein Einschubfach 24 für einen anbringbaren Tisch (Tray Table) vorgesehen.

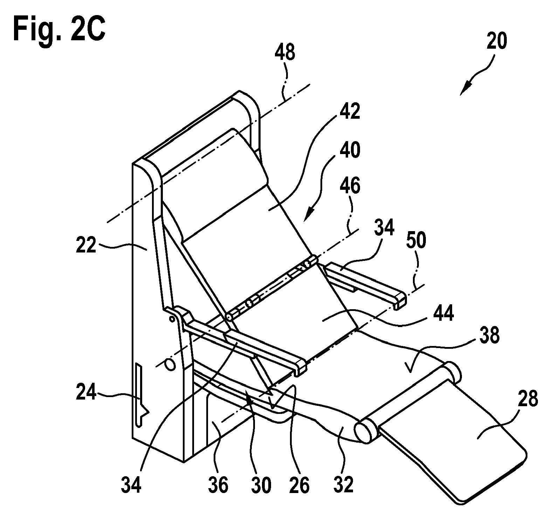

An der Trägerstruktur 22 ist eine erste Sitzfläche 26 vorgesehen, die beispielsweise über eine drehbare Aufhängung, Gelenke, Scharniere oder Ähnliches angebracht sein kann. Die erste Sitzfläche 26 hat auf ihrer Unterseite eine Aufnahmemöglichkeit für ein Fußteil 28. Dies kann den Vorteil haben, dass kein zusätzlicher Stauraum zum Verstauen des Fußteils 28 notwendig ist. Horizontal daneben ist ein erstes Rückenteil 30 vorgesehen, das ebenfalls an der Trägerstruktur 22 schwenkbar angebracht ist. Zusätzlich weist das erste Rückenteil 30 ein Kopfteil 32 auf. An den Seiten der Trägerstruktur 22 bzw. seitlich zum ersten Rückenteil 30 sind Armlehnen 34 angebracht, die schwenkbar zwischen einer hochgeklappten Stellung wie gezeigt oder heruntergeklappten Stellung (siehe Fig. 2B und 2C) geschwenkt werden können. Es kann ein Mechanismus vorgesehen sein, der bei Nichtbenutzung des Sitzes 20 sowohl die Armlehnen 34 als auch die erste Sitzfläche 26 selbsttätig in die gezeigte hochgeklappte Stellung bringt. Im unteren Bereich des Sitzes 20 ist ein Aufbewahrungsfach 36 für weitere Gegenstände, beispielsweise eine Schwimmweste oder ein Rettungsset, vorgesehen.

In Fig. 2B ist ein weiterer Zustand des erfindungsgemäßen Sitzes 20 gezeigt, bei dem die erste Sitzfläche 26 und die Armlehnen 34 heruntergeklappt sind. Dieser Zustand des Sitzes 20 kann als "TTL-Position" bezeichnet werden, bei dem sich die Flugbegleiter sitzend in einer aufrechten Sitzposition während Taxiing, Take-off und Landing (TTL) befinden. Das erste Rückenteil 30 dient hier als Rückenstütze und befindet sich in einer ersten Position aufrecht bzw. vertikal. Alle anderen gezeigten Teile entsprechen denen der Figur 1.

In Fig. 2C ist ein dritter Zustand des Flugzeugsitzes 20 gemäß der Erfindung gezeigt. Dieser Zustand kann als "Rest-Position" bezeichnet werden, da der Sitz 20 einen Liegesitz bildet und ein bequemeres Liegen oder Sitzen einer Person ermöglicht werden kann. Zunächst entsprechen die gezeigten Komponenten und Teile denen der Figuren 2A und 2B, wobei hier das erste Rückenteil 30 in einer zweiten Position heruntergeklappt ist und sich etwa horizontal zu einem Boden erstreckt. Es wird ein Teil der Rückseite des ersten Rückenteils 30 als zweite Sitzfläche 38 genutzt. Die erste Sitzfläche 26 befindet sich unter dem ersten Rückenteil 30 und kann als zusätzliche Stütze für das erste Rückenteil 30 dienen und so eine vorteilhaftere Kräfteverteilung oder sogar einen Entfall eines sonst üblichen oder notwendigen Abstützens des entfernten Endes des ersten Rückenteils 30 gegenüber dem Boden ermöglichen. Zwischen der Trägerstruktur 22 und dem ersten Rückenteil 30 ist, in Fig. 2 nun sichtbar, ein zweites Rückenteil 40 angebracht, das in dieser zweiten Position des ersten Rückenteils 30 als Rückenstütze für eine auf dem Sitz 20 sitzende oder liegende Person dienen kann.

Das zweite Rückenteil 40 weist ein erstes flächiges Segment 42 und ein zweites flächiges Segment 44 auf, die miteinander über eine zweite Segmentschwenkachse 46 miteinander schwenkbar verbunden sind. Das erste flächige Segment 42 ist über eine erste Segmentschwenkachse 48 schwenkbar an der Trägerstruktur 22 angebracht und das zweite flächige Segment 44 ist über eine dritte Segmentschwenkachse 50 schwenkbar schräg am ersten Rückenteil 30 angebracht. Durch relativ zueinander beweglichen Segmente 42, 44 kann das zweite Rückenteil 40 über die Segmentschwenkachsen 46, 48, 50 eingeklappt oder gefaltet werden und bei einem vertikal angeordneten ersten Rückenteil 30, beispielsweise wie in Fig. 2A und 2B gezeigt, platzsparend in einem Zwischenraum zwischen der Trägerstruktur 22 und dem ersten Rückenteil 30 verstaut werden. In einem Beispiel ist eine Lage der beiden Segmente 42, 44 zueinander manuell oder automatisch feststellbar oder arretierbar, sodass das zweite Rückenteil 40 in der hier gezeigten Position als Rückenstütze dienen kann und hierfür ausreichende Stabilität bietet. Im oberen Teil des zweiten Rückenteils 40 ist ein weiteres Kopfteil des zweiten Rückenteils 40 vorgesehen. Die Armlehnen 34 sind beispielsweise über eine Mechanik ausziehbar oder verlängerbar, sodass diese in den Sitzbereich der zweiten Sitzfläche 38 hereinragen und so auch in diesem Zustand des Sitzes 20 als Armstütze für eine Person dienen können. Das Fußteil 28 ist an einem Ende des ersten Rückenteils 30 angebracht. Dies kann optional erfolgen, beispielsweise über einen einfach zu handhabenden Mechanismus. Das Fußteil 28 kann in einem Beispiel in seiner Neigung verstellbar sein.

Die Figuren 3A bis 3D zeigen vereinfacht Schritte eines Umstellens eines erfindungsgemäßen Sitzes 20 von einer ersten Position in eine zweite Position eines ersten Rückenteils 30. Zum Zwecke der Vereinfachung sind hier nur die zur Beschreibung relevanten Elemente beschrieben. Im Übrigen entspricht der Aufbau des Flugzeugsitzes 20 dem der Ausführungsformen in den Figuren 2A bis 2C. In einer Ausgangsstellung gemäß Fig. 3A befindet sich ein erstes Rückenteil 30 in aufrechter, in etwa vertikaler Stellung und ist an seiner unteren Seite in etwa auf Höhe einer ersten Sitzfläche 26 schwenkbar mit der Trägerstruktur 22 verbunden. Die Trägerstruktur 22 kann beispielsweise an einer Wand in der Kabine befestigt sein und/oder an einem Kabinenboden 54 montiert sein. Armlehnen 34 sowie die erste Sitzfläche sind heruntergeklappt. Eine Ebene der ersten Sitzfläche 26 verläuft in etwa parallel zum Kabinenboden 54. Diese Stellung kann beispielsweise einer sogenannten TTL-Position entsprechen.

Das erste Rückenteil 30 kann nun über eine vierte Schwenkachse 56 im unteren Bereich des ersten Rückenteils 30 in einer Winkelbewegung mit ihrem oberen Teil von der Trägerstruktur 22 wegbewegt werden. Dabei kann beispielsweise ein Verriegelungsmechanismus vorgesehen sein, der eine Arretierung in einer Stellung gemäß Fig. 3A bietet und die zum Bewegen des ersten Rückenteils 30 beispielsweise durch einen Hebelmechanismus mit Betätigungsvorrichtung 58 gelöst werden kann. Im Raum zwischen der Trägerstruktur 22 und dem ersten Rückenteil 30 wird gemäß Fig. 3B ein Teil des zweiten Rückenteils 40 sichtbar, der sich während des Herunterbewegens der ersten Rückenteils 30 ausklappen oder entfalten kann. Die Armlehnen 34 befinden sich in hochgeklappter Stellung, die erste Sitzfläche 26 ist heruntergeklappt.

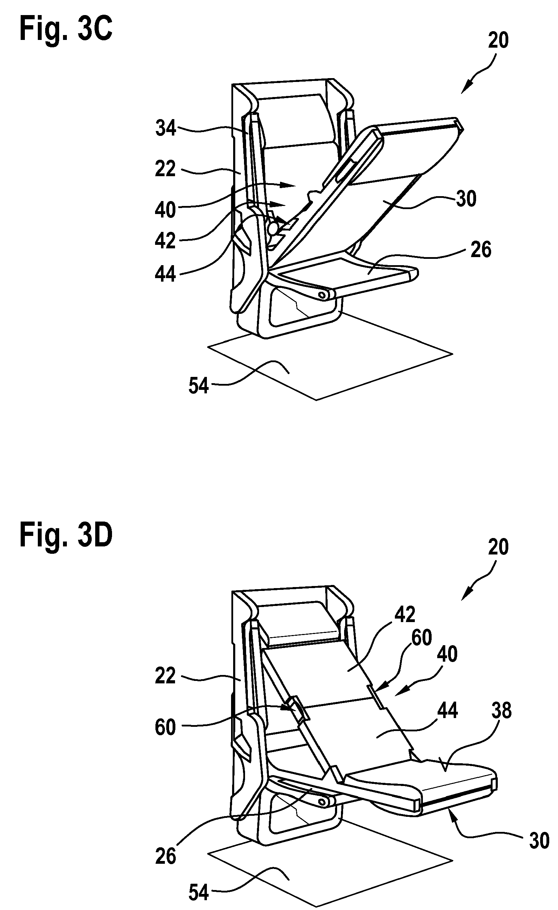

Wird das erste Rückenteil, wie in Fig. 3C gezeigt, weiter bewegt, schwenken ein erstes und zweites flächiges Segment 42, 44 weiter heraus. Die erste Sitzfläche 26 wird in vertikaler Richtung zunehmend vom ersten Rückenteil 30 überlagert.

In einer zweiten Position des ersten Rückenteils 30 verläuft diese, wie in Fig. 3D veranschaulicht, in etwa horizontal bzw. parallel zum Kabinenboden 54, sodass sie eine zweite Sitzfläche 38 bildet. Die beiden Segmente 42, 44 bilden nun eine Ebene, die geeignet ist, eine Rückenstütze für eine Person zu bilden. Hier kann beispielsweise ein arretierbares Gelenk 60 vorgesehen sein, was in einer Endstellung selbsttätig einrastet und ein Zurückklappen oder Zurückbewegen der Segmente 42, 44 bei Belastung verhindern kann. Das zweite Rückenteil 40 weist in einem Beispiel gegenüber dem ersten Rückenteil 30 einen Winkel von etwa 45 bis 50 Grad auf. Ein Umstellen des Sitzes 20 in die Ausgangsstellung gemäß Fig. 3A erfolgt analog in umgekehrter Reihenfolge.

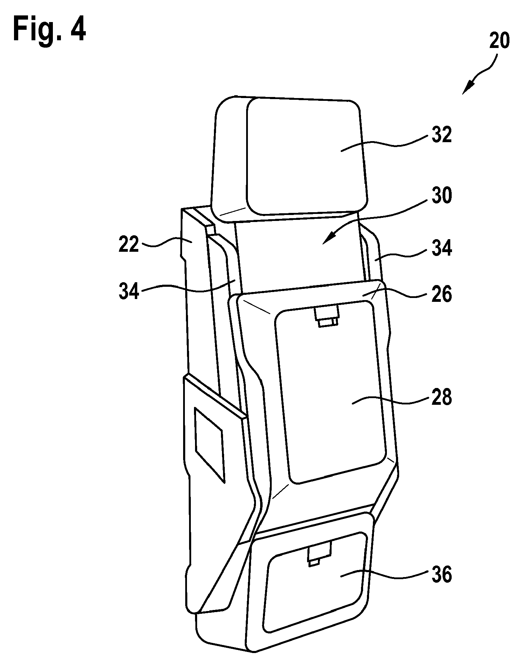

Fig. 4 zeigt ein weiteres Beispiel eines erfindungsmäßen Sitzes 20 dessen Elemente prinzipiell den beschriebenen Elementen in den Ausführungsbeispielen der Figuren 2A bis 3D entsprechen. Eine erste Sitzfläche 26 ist in eingeklapptem Zustand gezeigt, wobei an deren Unterseite bzw. Vorderseite die Aufnahme eines am Kopfteil 32 eines ersten Rückenteils 30 anbringbaren Fußteils 28 vorgesehen ist. Ein Aufbewahrungsfach 36 erlaubt die Aufnahme beispielsweise einer Schwimmweste, Rettungskits oder anderer Gegenstände. An allen gezeigten Varianten kann ein Gurtsystem (nicht gezeigt) zur Sicherung der Person vorgesehen sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Flugzeugsitz (20), aufweisend
eine Trägerstruktur (22);
eine erste Sitzfläche (26), die sich im Wesentlichen horizontal erstreckt und an der Trägerstruktur (22) angebracht ist;
ein erstes Rückenteil (30);
wobei das erste Rückenteil (30) um eine im Bereich der ersten Sitzfläche (26) angeordnete Rückenteilschwenkachse (56) in einer vertikalen Ebene schwenkbar an der Trägerstruktur (22) angebracht ist, sodass das erste Rückenteil (30) vertikal angeordnet in einer ersten Position zusammen mit der ersten Sitzfläche (26) einen Sitz für ein aufrechtes Sitzen einer Person bildet und sich in einer zweiten Position horizontal über der ersten Sitzfläche (26) erstreckt;
wobei die der Trägerstruktur (22) zugewandte Rückseite des ersten Rückenteils (30) derart ausgeführt ist, dass zumindest ein Teilbereich der Rückseite in der zweiten Position eine zweite Sitzfläche (38) bildet; sowie
ein zweites Rückenteil (40), das zwischen der Trägerstruktur (22) und dem ersten Rückenteil (30) angeordnet ist und mit einem Ende an der Trägerstruktur (22) und mit seinem anderen Ende schräg verlaufend am ersten Rückenteil (30) angebracht ist, sodass in der zweiten Position das zweite Rückenteil (40) zusammen mit der zweiten Sitzfläche (38) einen Liegesitz für die Person bildet.

2. Flugzeugsitz (20) gemäß Anspruch 1, wobei das zweite Rückenteil (40) aufweist:
ein erstes (42) und zweites flächiges Segment (44);
wobei das erste flächige Segment (42) um eine erste Segmentschwenkachse (48) schwenkbar an der Trägerstruktur (22) angebracht ist und über eine zweite Segmentschwenkachse (46) an einer gemeinsamen Kante schwenkbar mit dem zweiten flächigen Segment (44) verbunden ist;
wobei das zweite flächige Element (44) um eine dritte Segmentschwenkachse (50) schwenkbar am ersten Rückenteil (30) angebracht ist;
wobei die beiden Segmente (42, 44) so ausgeführt sind und die Segmentschwenkachsen (46, 48, 50) parallel zueinander so angeordnet sind, dass in einer zweiten Position des ersten Rückenteils (30) das erste Segment (42) und das zweite Segment (44) hintereinander in einer Ebene angeordnet sind.

3. Flugzeugsitz (20) gemäß Anspruch 2, wobei in der zweiten Position des ersten Rückenteils (30) eine Position der beiden Segmente (42, 44) des zweiten Rückenteils (40) relativ zueinander feststellbar ist.

4. Flugzeugsitz gemäß einem der Ansprüche 2 oder 3, wobei eine Länge des ersten (42) und zweiten Segmentes (44) und die Anordnung der Segmentschwenkachsen (46, 48, 50) des zweiten Rückteils (40) so gewählt sind, dass in der ersten Position des ersten Rückenteils (30) das erste flächige Segment (42) im Wesentlichen parallel neben dem zweiten flächigen Segment (44) angeordnet ist.

5. Flugzeugsitz (20) gemäß einem der Ansprüche 2 bis 4, wobei in der zweiten Position ein Winkel zwischen einer Senkrechten zur Ebene des ersten Rückenteils (30) und der Ebene des ersten und zweiten Segmentes (42, 44) zwischen 45 und 50 Grad beträgt.

6. Flugzeugsitz (20) gemäß einem der vorhergehenden Ansprüche, wobei an seinem von der Trägerstruktur (22) entfernten Ende des ersten Rückenteils (30) eine Stützeinrichtung angeordnet ist, die ausgeführt ist, das erste Rückenteil (30) in der zweiten Position relativ zu einem Boden (54) abzustützen.

7. Flugzeugsitz (20) gemäß einem der vorhergehenden Ansprüche, weiterhin aufweisend ein Fußteil (28), das an der zweiten Sitzfläche (38) an dem von der Trägerstruktur (22) entfernten Ende des ersten Rückenteils (30) anbringbar oder ausfaltbar ist.

8. Flugzeugsitz (20) gemäß Anspruch 7, wobei das Fußteil (28) abnehmbar ist und zur Aufbewahrung in einem Innenbereich der ersten Sitzfläche (26) angeordnet werden kann.

9. Flugzeugsitz (20) gemäß einem der Ansprüche 7 oder 8, wobei die erste Sitzfläche (26) von der Trägerstruktur (22) lösbar ist und als Fußteil (28) am ersten Rückenteil (30) anbringbar ist.

10. Flugzeugsitz (20) gemäß einem der vorhergehenden Ansprüche, wobei die erste Sitzfläche (26) in einer ersten Position des ersten Rückenteils (30) von einer horizontalen Position in eine vertikale Position schwenkbar ist und derart mit einer Armlehne (34) verbunden ist, dass diese beim Schwenken der ersten Sitzfläche (26) in die vertikale Position ebenfalls von einer horizontalen Position in eine vertikale Position schwenkt.
